Europäisches Patentamt

European Patent Office

Office européen des brevets

(19)

(11) Veröffentlichungsnummer: **0 180 915**
**B1**

(12) # EUROPÄISCHE PATENTSCHRIFT

(45) Veröffentlichungstag der Patentschrift:
**31.01.90**

(51) Int. Cl.⁴: **B 23 C 3/28**

(21) Anmeldenummer: **85113818.0**

(22) Anmeldetag: **30.10.85**

(54) Fräskopf und Fräsmaschine zum Fräsen von Nuten und andern Vertiefungen.

(30) Priorität: **07.11.84 CH 5341/84**

(43) Veröffentlichungstag der Anmeldung:
**14.05.86 Patentblatt 86/20**

(45) Bekanntmachung des Hinweises auf die Patenterteilung:
**31.01.90 Patentblatt 90/5**

(84) Benannte Vertragsstaaten:
**AT BE DE FR GB IT LU NL SE**

(56) Entgegenhaltungen:
**CH-A- 75 473**
**CH-A- 490 146**
**DE-B- 2 120 133**
**US-A- 3 106 869**

(73) Patentinhaber: **Wiederkehr, Hans, Dr., Ifangstrasse 107, CH-8153 Rümlang (CH)**

(72) Erfinder: **Wiederkehr, Hans, Dr., Ifangstrasse 107, CH-8153 Rümlang (CH)**

(74) Vertreter: **EGLI-EUROPEAN PATENT ATTORNEYS, Horneggstrasse 4, CH-8008 Zürich (CH)**

ACTORUM AG

## Beschreibung

Die Erfindung betrifft eine Fräsmaschine nach dem Oberbegriff des Patentanspruchs 1.

Zum Einarbeiten von Nuten und andern Vertiefungen in Bohrungen ist das Räumen weitverbreitet. Nun sind aber Räumnadeln sehr kostspielige und in der Instandhaltung aufwendige Werkzeuge, die zudem nur für eine bestimmte Nutenbreite verwendbar sind. Auch weisen sie schneidtechnisch Mängel auf, weil sie seitlich nicht frei schneiden, also gerade dort, wo eine einwandfreie Oberflächengüte bei der Keilnut erwünscht ist. Dieses ungünstige Schneiden kann bei Materialien hoher Festigkeit zum Bruch der Räumnadel führen.

Weiter ist es bekannt, Nuten in Bohrungen durch Stossen herzustellen. Stossmaschinen müssen aber sehr robust gebaut sein. Aber gerade dies ist beim Werkzeughalter wegen der beschränkten Platzverhältnisse in der Bohrung nicht möglich. Deshalb können jeweils mit einem Werkzeughalter nur Werkstücke bis zu einer bestimmten Grösse bearbeitet werden, während grosse Werkstücke, in denen grosse tiefe Nuten eingearbeitet werden, eine entsprechend grössere Maschine erfordern. Bei langen zu stossenden Nuten ist es aber unvermeidlich, dass das Werkzeug, d. h. der Stoss-Stahl weit auslädt, was zu einem Abweichen und damit zu einer schlechten Oberflächengüte führt. Zudem schneidet der Stoss-Stahl seitlich auch nicht frei und drückt dadurch. Weiter ist beim Stossen von Nuten in Bohrungen nachteilig, dass der Arbeitsvorgang nicht kontinuierlich ist, so dass durch den Leer-Rücklauf teure Totzeiten entstehen.

Bei einer bekannten Kopierfräsmaschine nach US-A 3 106 869 ist das Werkstück auf dem Kreuztisch eines Arbeitstisches befestigt. An einem Ständer ist der Antrieb des Fräswerkzeuges angeordnet. Dadurch ist der zulässige Durchmesser des bearbeitbaren Werkstückes durch den Ständer beschränkt.

Hier setzt die Erfindung ein, der die Aufgabe zugrundeliegt, eine Fräsmaschine der eingangs erwähnten Art so auszugestalten, dass grosse Werkstücke unbehindert bearbeitbar sind, ohne dass hierzu eine entsprechende grosse Maschine erforderlich wäre. Diese Aufgabe wird gemäss der Erfindung durch das Kennzeichen des Patentanspruches 1 gelöst.

Die Erfindung ist in der Zeichnung in einem Ausführungsbeispiel dargestellt und nachfolgend beschrieben. Es zeigen:

Fig. 1 eine schematisch dargestellte Seitenansicht einer Fräsmaschine mit einem horizontalen Arbeitstisch und einem von unten durch den Arbeitstisch ragenden Fräskopf und

Fig. 2 eine schematisch dargestellte Draufsicht der Fräsmaschine nach Fig. 1.

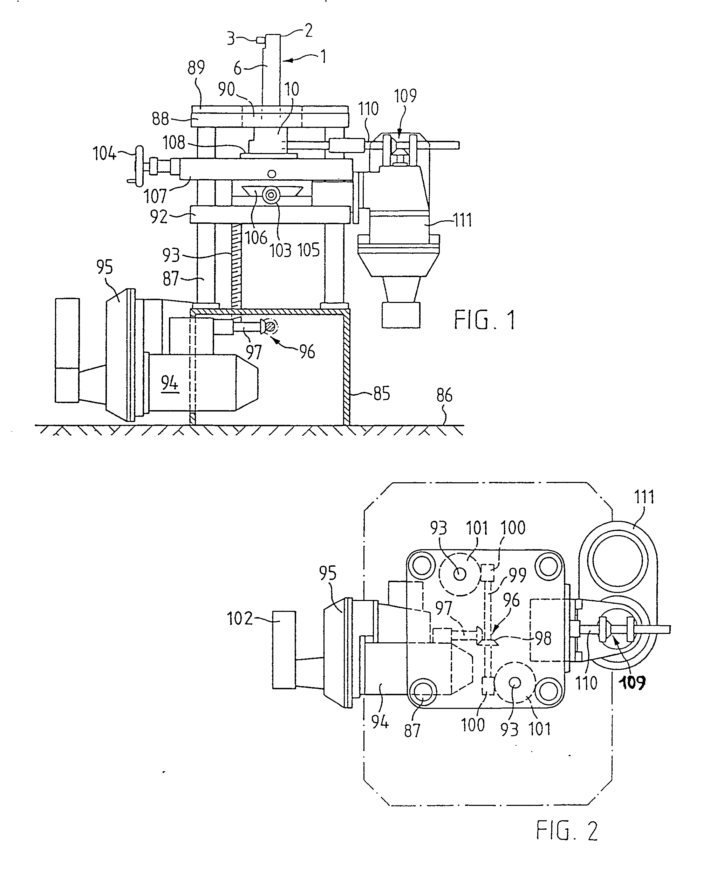

Für die Herstellung von Nuten in Bohrungen kann mit Vorteil eine Fräsmaschine nach Fig. 1 und 2 vorgesehen werden. Diese Fräsmaschine dient der Bearbeitung von Innenkeilnuten in der Bohrung eines Werkstückes. Es können hierbei nicht nur gerade Einfach- und Vielfachkeilnuten, sondern auch Schräg- und Spiralkeilnuten bearbeitet werden. Wesentlich ist, dass die Bearbeitung durch einen stabförmigen Fräskopf 1, siehe Fig. 1, erfolgt. Das Fräswerkzeug 3 ist z.B. ein zweiseitig schneidender spiralverzahnter Schaftfräser, der aus hochlegiertem Schnellstahl mit bester Schneidengeometrie hergestellt werden kann, trotzdem aber ein billiges und leicht instandzuhaltendes Werkzeug ist.

Das Maschinenbett der Fräsmaschine 85 liegt auf einer Standfläche 86, z.B. einem Fundament oder Werkstattboden und trägt vier Säulen 87, die an ihren Enden einen Arbeitstisch 88 tragen, auf den das zu bearbeitende Werkstück gelegt und befestigt wird. Der Arbeitstisch 88 weist zweckmässig eine Teileinrichtung 89 auf, wobei im Zentrum des Arbeitstisches 88 und der Teileinrichtung 89 eine Öffnung 90 vorgesehen ist, durch die sich der stabförmig ausgebildete Fräskopf 1 von unten her in die Bohrung des Werkstückes erstreckt.

Die Säulen 87 dienen nicht nur der Lagerung des Arbeitstisches 88, sondern auch der Führung einer Plattform 92, die durch zwei synchron angetriebene Gewindespindeln 93 auf- und abbewegt werden kann. Hierzu dient ein Motor 94, z.B. ein Elektromotor oder Hydromotor, mit einem Reduktionsgetriebe 95, z.B. einem stufenlosen Getriebe. Die Abtriebswelle 97 des Reduktionsgetriebes 95 ragt in das Maschinenbett 85 und ist mit einem darin gelagerten Verzweigungsgetriebe 96 verbunden, das, siehe die schematische Darstellung in Fig. 2, ein Kegelradgetriebe 98 umfasst, dessen eine Welle die Antriebswelle 97 des Reduktionsgetriebes 95 ist und dessen andere senkrecht dazu liegende Welle 99 an ihren beiden Enden je eine Schnecke 100 trägt, die über ein Schneckenrad 101 die beiden Gewindespindeln 93 antreiben.

In Fig. 2 ist mit dem Reduktionsgetriebe 95 ein Eilgangantrieb 102 verbunden, durch den dem Reduktionsgetriebe 95 eine Zusatzdrehzahl überlagert werden kann, wodurch das Zustellen des Fräskopfes 1 an die Bearbeitungsstelle mit erhöhter Geschwindigkeit erfolgt. Der Antrieb der Gewindespindel 93 kann aber auch in anderer Weise, z.B. durch einen gemeinsamen Kettentrieb oder mittels Schrittmotoren durchgeführt werden; ein Ersatz der Gewindespindeln 93 durch eine Schwalbenschwanzführung ist ebenfalls möglich. Wesentlich ist schlussendlich, dass die Plattform 92 eine geeignete Hubbewegung als Vorschubbewegung für den Fräskopf 1 und das Fräswerkzeug 3 ausführen kann.

Auf der Plattform 92 ist ein Kreuztisch 105 befestigt, der durch zwei Handantriebe 103, 104 verstellbare Vorschubeinheiten 106, 107 aufweist, die eine Bewegung in der Horizontalebene senkrecht zueinander gestatten. Die Handantriebe 103, 104 können auch durch motorische Antriebe, z. B. elektrische oder hydraulische Regelantriebe, ersetzt werden.

Auf der Vorschubeinheit 107 ist der Fräskopf 1 mit Hilfe eines Befestigungsflansches 108 befestigt, wobei das daran anschliessende Gehäuse 10 so ausgebildet ist, dass der Fräskopf seitlich in das Gehäuse 10 angeordnet werden kann. Der Fräsantrieb, siehe Fig. 1, ist ein an der Vorschubeinheit 107 befestigter Motor 111, z. B. ein Elektro- oder Hydromotor, der über ein Winkelgetriebe 109 und eine Antriebswelle 110 mit den weiteren Antriebsteilen des Gehäuses 10 und den Antriebsteilen des Fräskopfes 1 verbunden ist.

Die stabförmigen Fräsköpfe 1 stellen zweckmässige Geräte für die in Fig. 1 und 2 beschriebene Maschine dar, mit der wegen des freien Raumes und des Arbeitstisches 88 nicht nur kleine, sondern auch sehr grosse Werkstücke bearbeitet werden können. Die Fräsköpfe 1 lassen sich jedoch auch in anderer Weise vielseitig verwenden.

Die beschriebene Fräsmaschine kann auch mit Schleifwerkzeugen eingesetzt werden.

## Patentansprüche

1. Fräsmaschine zum Fräsen von Nuten und andern Vertiefungen, insbesondere in Hohlräumen, mit einem an dem Ende eines stabförmigen Fräskopfes (1) quer zur Längsachse des Fräskopfes angeordneten Fräswerkzeug (3), wobei ein mit oder ohne Teileinrichtung (89) versehener horizontaler, an einem Maschinenbett (85) abgestützter Arbeitstisch (88) zur Lagerung eines Werkstückes vorgesehen ist, dadurch gekennzeichnet, dass unter dem Arbeitstisch (88) ein höhenverstellbar auf einer Plattform (92) gelagerter Kreuztisch (105) angeordnet ist, auf dem der senkrecht nach oben gerichtete, sich durch eine Öffnung (90) des Arbeitstisches erstreckende Fräskopf (1) befestigt und von dort durch einen motorischen Antrieb (111) angetrieben ist.

2. Fräsmaschine nach Anspruch 1, dadurch gekennzeichnet, dass der Arbeitstisch (88) am Maschinenbett (85) durch Säulen (87) abgestützt ist, an denen auch die Plattform (92) geführt ist.

3. Fräsmaschine nach Anspruch 2, dadurch gekennzeichnet, dass die Plattform (92) durch zwei über ein Verzweigungsgetriebe (96) von einem motorischen Antrieb (94, 95) synchron angetriebene Gewindespindeln (93) höhenverstellbar ist.

## Claims

1. Milling machine for milling channels and other depressions, particularly in hollow spaces, with a milling tool (3) arranged on the end of a rod-shaped milling head (1), wherein a horizontal worktable (88) with or without a sub-assembly (89) supported on a machine bed (85) is provided for mounting a workpiece, characterised in that below the worktable (88) is arranged a crosstable (105) mounted height adjustably on a platform (92) on which the milling head (1) perpendicularly directed upwardly and extending through an opening (90) of the worktable is mounted and is driven from there by a motor drive (111).

2. Milling machine according to Claim 1, characterised in that the worktable (88) is supported on the machine bed (85) by columns (87) on which the platform (92) is also guided.

3. Milling machine according to Claim 2, characterised in that the platform (92) is adjustable in height by means of two threaded spindles (93) synchronously driven by a motor drive (94, 95) via a branch gear (96).

## Revendications

1. Fraiseuse pour le fraisage de rainures et autres cavités, en particulier dans des espaces creux, et comportant un outil de fraisage (3) disposé à l'extrémité d'une tête de fraisage (1) en forme de barre, transversalement à l'axe longitudinal de la tête de fraisage, une table de travail (88) étant prévue pour supporter une pièce, table (88) pourvue ou non d'un dispositif de division (89) et soutenue sur un banc de machine (85), caractérisée en ce qu'une table à mouvements croisés (105) réglable en hauteur et montée sur une plate-forme (92) est disposée sous la table de travail (88), table (105) sur laquelle est fixée la tête de fraisage (1) orientée verticalement vers le haut et s'étendant par une ouverture (90) de la table de travail et entraînée de là par un entraînement à moteur (111).

2. Fraiseuse selon la revendication 1, caractérisée en ce que la table de travail (88) est soutenue sur le banc de la machine (85) à l'aide de colonnes (87) sur lesquelles est également guidée la plate-forme (92).

3. Fraiseuse selon la revendication 2, caractérisée en ce que la plate-forme (92) est réglable en hauteur au moyen de deux broches filetées (93) entraînées par l'intermédiaire d'une transmission de ramification (96) partant d'un entraînement à moteur (94, 95).

FIG. 1

FIG. 2